# EUROPÄISCHE PATENTSCHRIFT

(11) **EP 1 422 433 B1**
(45) Veröffentlichungstag und Bekanntmachung des Hinweises auf die Patenterteilung: **15.08.2007**
(21) Anmeldenummer: 03026163.0
(22) Anmeldetag: 14.11.2003
(51) Int. Cl.: F16D 25/12, F16D 48/04, F16D 48/06

(54) **Hydraulisches System**
Hydraulic system
Système hydraulique

(30) Priorität: 20.11.2002 DE 10254234
(43) Veröffentlichungstag der Anmeldung: 26.05.2004
(73) Patentinhaber: LuK Lamellen und Kupplungsbau Beteiligungs KG, 77813 Bühl (DE)
(72) Erfinder: Wuhrer, Alexander, 69226 Nussloch (DE); Hausner, Markus, 76135 Karlsruhe (DE); Serebrennikov, Boris, 77815 Bühl-Kappelwindeck (DE)

(56) Entgegenhaltungen:
- EP-A- 0 231 465
- EP-A- 1 084 923
- EP-A- 1 160 474
- EP-A- 1 167 111
- WO-A-02/16807
- DE-A- 3 011 777
- DE-A- 10 017 007
- US-A- 5 775 782
- US-A1- 2002 096 415
- US-B1- 6 220 675

## Beschreibung

Die vorliegende Erfindung betrifft ein hydraulisches Kupplungsbetätigungssystem für Kraftfahrzeuge, umfassend einen Geberzylinder, einen Nehmerzylinder und eine diese verbindende Druckmediumsleitung.

Ein gattungsgemäßes hydraulisches System ist beispielsweise aus der DE 10049913 A1 bekannt. Bei derartigen Systemen nach Stand der Technik ist die an dem Geberzylinder aufzubringende Kraft, bei manueller Kupplungsbetätigung ist dies die Pedalkraft, direkt abhängig von der Kupplungsbetätigungskraft. Zwar lassen sich in einem hydraulischen System generell durch geeignete Wahl der hydraulischen Querschnitte von Geberzylinder und Nehmerzylinder beliebige Über- oder Untersetzungen der Kraft und damit auch der Wegverhältnisse erzielen, die Möglichkeiten einer Kraftuntersetzung sind durch die damit einhergehenden Vergrößerungen der Pedalwege aber begrenzt.

In der US 5,775,782 ist ein hydraulisches Bremssystem offenbart, bei dem die Bremskraft verbessert wird, indem der Bremsdruck mittels einer Pumpe erhöht wird.

Der vorliegenden Erfindung liegt das Problem zugrunde, die auf den Geberzylinder aufzubringende Betätigungskraft bei gleichbleibendem Betätigungsweg des Geberzylinders zu erniedrigen.

Dieses Problem wird durch ein hydraulisches Kupplungsbetätigungssystem für Kraftfahrzeuge, umfassend einen Geberzylinder, einen Nehmerzylinder und eine diese verbindende Druckmediumsleitung gelöst, bei dem in der Druckmediumsleitung eine hydraulische Pumpe angeordnet ist, die den Druck auf der Nehmerzylinderseite gegenüber dem Druck auf der Geberzylinderseite um einen Differenzdruck erhöht. Mit Druckmediumsleitung ist hier die den Geberzylinder mit dem Nehmerzylinder verbindende Hydraulikleitung gemeint. Falls ein Druckbegrenzungsventil, ein Umschaltventil oder dergleichen innerhalb dieser Druckmediumsleitung angeordnet ist, so kann dieses sowohl in dem Bereich der Druckmediumsleitung, die zwischen Geberzylinder und Pumpe angeordnet ist, als auch in dem Bereich der Druckmediumsleitung, der zwischen Pumpe und Nehmerzylinder angeordnet ist, angeordnet sein. Sowohl der Geberzylinder als auch der Nehmerzylinder können übliche nach Stand der Technik bekannte Baugruppen sein. Die Unteransprüche betreffen vorteilhafte Ausgestaltungen der Erfindung.

Die Pumpe kann eine Flügelzellenpumpe, eine Rotationskolbenpumpe, eine Innenzahnradpumpe, eine Kolbenpumpe oder dergleichen sein. Grundsätzlich kommen hier praktisch alle bekannten Pumpen in Frage. Die Pumpe kann durch einen Elektromotor angetrieben werden, alternativ ist hier auch ein pneumatischer, hydraulischer oder mechanischer Antrieb denkbar. Die Antriebsleistung kann dabei direkt durch ein Nebenaggregat des Antriebsmotors, also eine pneumatische oder hydraulische Pumpe bereitgestellt werden. Bei einem mechanischen Antrieb kann die Pumpe direkt mittels eines Getriebes oder über eine Kupplung mit der Kurbelwelle des Antriebsmotors gekoppelt sein. Vorteilhaft ist in den meisten Fällen ein elektrischer Antrieb, da elektrische Energie in jedem Kraftfahrzeug genutzt werde kann, und die Regelung eines Elektromotors durch eine entsprechende Leistungselektronik besonders einfach und kostengünstig zu realisieren ist. Ein hydraulischer oder mechanischer Antrieb kann bei großen Motordrehmomenten des Antriebsmotors und damit entsprechend hoher Kupplungskräfte von Vorteil sein.

Vorteilhaft ist es, wenn mindestens an der Nehmerzylinderseite ein Manometer an der Druckmediumsleitung angeordnet ist. Alternativ kann auch mindestens an der Geberzylinderseite oder sowohl an der Nehmerzylinderseite als auch an der Geberzylinderseite ein Manometer an der Druckmediumsleitung angeordnet sein. Besonders vorteilhaft ist es, wenn das Manometer ein elektrisches Signal abhängig vom Druck in der Druckmediumsleitung abgeben kann. Das elektrische Signal kann beispielsweise zur Steuerung des Elektromotors der Pumpe weiter verarbeitet werden.

In einer Weiterbildung der Erfindung ist vorgesehen, dass Pumpe, Manometer, Elektromotor und Regler Teil eines Regelkreises sind. Die eigentliche Regelstrecke ist dabei die Pumpe bzw. der Differenzdruck zwischen Nehmerzylinderseite und Geberzylinderseite. Bei Kenntnis beispielsweise des Druckes auf der Nehmerzylinderseite kann über die Strom-/Drehmomentkennlinie des Elektromotors sowie die Drehzahl/Druckkennlinie der Pumpe unmittelbar aus dem Antriebsstrom des Elektromotors auf den Differenzdruck zwischen Nehmerzylinderseite und Geberzylinderseite rückgeschlossen werden. Bei Messung beispielsweise des Druckes auf der Nehmerzylinderseite erübrigt sich auf diese Weise eine zusätzliche Messung des Druckes auf der Geberzylinderseite. Der Druck auf der Geberzylinderseite wird somit mittelbar über die Messung des Antriebsstromes des Elektromotors und die Kenntnis der jeweiligen Kennlinien des Elektromotors und der Pumpe beobachtet.

Die Druckkennlinie auf der Geberzylinderseite lässt sich an beliebige Kennlinien auf der Nehmerzylinderseite anpassen. Beispielsweise kann auf diese Weise auch ein unvorteilhafter Verlauf der Kupplungskraft ausgeglichen werden.

Vorteilhaft ist es, wenn die Pumpleistung der Pumpe auf einen vorgegebenen Differenzdruck geregelt ist. Dies kann beispielsweise ein konstanter Differenzdruck sein oder ein Differenzdruck, der abhängig vom Druck auf der Nehmerzylinderseite und/oder der Geberzylinderseite ist. Die Pumpe kann den Druck auf der Nehmerzylinderseite also beispielsweise um einen konstanten Betrag erhöhen, der Druck kann um einen konstanten Faktor erhöht werden oder er kann einer beliebigen Funktion folgen, die vom Druck auf der Nehmerzylinderseite oder Geberzylinderseite abhängig ist.

Vorteilhaft ist es, wenn die Pumpe bei etwa druckloser Geberzylinderseite abgeschaltet ist. Ebenso kann die Pumpe bei druckloser Nehmerzylinderseite abgeschaltet sein. Dadurch soll gewährleistet sein, dass bei nichtbetätigtem Kupplungspedal die Pumpe als solche außer Betrieb ist. Alternativ können hier auch andere Größen herangezogen werden, um den Betrieb der Pumpe abzuschalten, beispielsweise die Stellung des Kupplungspedals.

Im Folgenden werden Ausführungsbeispiele der Erfindung anhand der beiliegenden Zeichnungen erläutert. Dabei zeigen:
- Fig. 1: eine schematische Darstellung eines hydraulischen Kupplungsbetätigungssystem anhand eines Ausführungsbeispiels einer Kupplungsausrückvorrichtung
und
- Fig. 2: eine Prinzipdarstellung des erfindungsgemäßen hydraulischen Kupplungsbetätigungssystem.

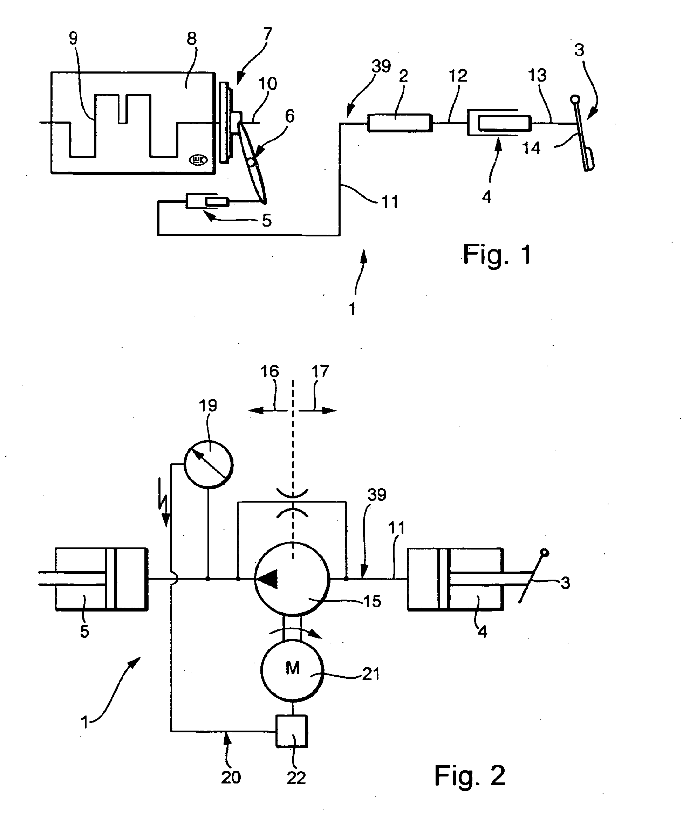

Fig. 1 zeigt in schematischer Darstellung eine mögliche Ausgestaltung eines hydraulischen Systems anhand einer Kupplungsausrückvorrichtung 3 mit einem Geberzylinder 4 und einem Nehmerzylinder 5. Ein Druckbegrenzungsventil 2 ist in dem gezeigten Ausführungsbeispiel in einer Druckmediumsleitung 39 zwischen einen ersten Leitungsstrang 11 und einem zweiten Leitungsstrang 12 eingebaut und trennt beide in nicht geöffnetem Zustand voneinander. Es versteht sich, dass in anderen Ausführungsbeispielen das Druckbegrenzungsventil 2 in den Geberzylinder 4 oder in den Nehmerzylinder 5 integriert sein kann sowie in anderen hydraulischen Systemen beispielsweise Bremsanlagen, Lenkhelfsysteme, und dergleichen in ein Funktionsbauteil integriert sein kann. Weiterhin kann ein Druckbegrenzungsventil 2 in jedem hydraulischen Leitungssystem in vorteilhafter Weise als Druckbegrenzungsventil und/oder als Schwingungsfilter beispielsweise als sogenanntes "Kribbelfilter" von Vorteil sein.

Das Kupplungsausrücksystem 3 betätigt die Kupplung 7 hydraulisch durch Beaufschlagung des Geberzylinders 4 mittels eines Betätigungsgliedes 14, das ein Fußpedal, ein Aktor, beispielsweise ein elektrischer Aktor, oder dergleichen sein kann. Hierdurch wird mittels einer mechanischen Übertragung 13 Druck im Geberzylinder 4 aufgebaut, der über den zweiten Leitungsstrang 12, über das Druckbegrenzungsventil 2 und den ersten Leistungsstrang 11 einen Druck im Nehmerzylinder 5 aufbaut. Der Nehmerzylinder 5 kann - wie in dem gezeigten Beispiel - konzentrisch um die Getriebeeingangswelle 10 angeordnet sein und sich axial an einem - nicht dargestellten Getriebegehäuse abstützen und die nötige Ausrückkraft über ein Ausrücklager an der Kupplung 7, beziehungsweise an deren Ausrückelementen wie Tellerfeder, aufbringen. Weitere Ausführungsbeispiele können einen Nehmerzylinder 5, der über eine Ausrückmechanik einen Ausrücker betätigt und außerhalb der Kupplungsglocke angeordnet ist, vorsehen, wobei dieser mittels eines in hydraulischer Verbindung mit dem Geberzylinder stehenden im Nehmerzylindergehäuse untergebrachten Kolbens die Ausrückmechanik axial beaufschlagt. Zum Aufbringen der Ausrückkraft ist der Nehmerzylinder jeweils gehäusefest am Getriebegehäuse, das hier nicht näher dargestellt ist, oder an einem anderen gehäusefesten Bauteil angebracht. Die Getriebeeingangswelle 10 überträgt bei geschlossener Kupplung 7 das Drehmoment der Brennkraftmaschine 8 auf ein nicht näher dargestelltes Getriebe und anschließend auf die Antriebsräder eines Kraftfahrzeuges.

Durch die Verbrennungsprozesse in der Brennkraftmaschine 25 erfährt die Kurbelwelle 9 in Abhängigkeit von der Ausgestaltung der Brennkraftmaschine 8, beispielsweise in Abhängigkeit von der Zylinderzahl, ungleichförmige Belastungen, die sich in Axial- und/oder Taumelschwingungen dieser äußern und die über die Ausrückmechanik 6 auf den Nehmerzylinder 5, das Leitungsstränge 11, 12 auf den Geberzylinder 4 und von dort über die mechanische Verbindung 13 auf das Betätigungsglied 14 übertragen werden. Im Falle eines Kupplungspedals als Betätigungsglied werden diese Schwingungen als unangenehm empfunden. Im Falle eines Aktors als Betätigungsglied 14 kann beispielsweise eine verminderte Regelgenauigkeit oder eine verkürzte Lebensdauer die Folge der Schwingungen sein. Das Druckbegrenzungsventil 2 ist daher zur Dämpfung in die Leitungen 11, 12 eingeschaltet und zur Dämpfung der von der Kurbelwelle 9 eingetragenen Vibrationen abgestimmt. Der Frequenzbereich derartiger Schwingungen liegt typischer Weise bei 50 bis 200 Hz.

Im Folgenden wird auf Fig. 2 Bezug genommen. In der Druckmediumsleitung 39 ist zwischen Geberzylinder 4 und Nehmerzylinder 5 eine Pumpe 15 angeordnet. Die Pumpe 15 trennt die Hydraulikleitung vergleichbar der Darstellung der Fig. 1 in einen ersten und einen zweiten Leitungsstrang 11, 12. Ein mögliches Druckbegrenzungsventil oder ein Kribbelfilter ist der Einfachheit halber nicht dargestellt. Die Pumpe 15 wird durch einen Elektromotor 21 angetrieben, welcher wiederum über einen Regler 22 an das hier nicht dargestellte Bordnetz beispielsweise eines Kraftfahrzeuges angeschlossen ist. Die Stromversorgung des Reglers 22 aus dem Bordnetz ist hier der Einfachheit halber ebenfalls nicht dargestellt. Der Leitungsstrang 11, 12 wird durch die Pumpe 15 in eine Nehmerzylinderseite 16 sowie eine Geberzylinderseite 17 geteilt. Der erste Leitungsstrang 11 liegt auf der Nehmerzylinderseite 16, der zweite Leitungsstrang 12 auf der Geberzylinderseite 17. Die Pumpe 15 kann eine Turbomaschine, beispielsweise Flügelzellenpumpe, Rotationskolbenpumpe, Innenzahnradpumpe oder dergleichen, oder eine Kolbenpumpe wie beispielsweise eine Radialkolbenpumpe sein.

Auf der Nehmerzylinderseite 16 ist an den Leitungsstrang 12 ein Manometer 19 angeschlossen. Das Manometer 19 verfügt über Mittel, den gemessenen Druck in ein elektrisches Signal umzuwandeln. Das elektrische Signal wird über eine Signalleitung 24 dem Regler 22 zugeführt. Das Manometer 19, der Regler 22 sowie der Elektromotor 21 und die Pumpe 15 bilden einen Regelkreis 20. Die Regelung dieses Regelkreises 20 kann nach verschiedenen Strategien erfolgen, beispielsweise kann durch geeignete Steuerung der Pumpe 15 eine konstante Druckdifferenz zwischen der Geberzylinderseite 17 und der Nehmerzylinderseite 16 oder eine vom Druck entweder auf der Geberzylinderseite 17 oder der Nehmerzylinderseite 16 oder von beiden Seiten abhängige Druckdifferenz eingestellt werden. Der Druck kann auch beispielsweise um einen konstanten Faktor erhöht werden oder einer beliebigen Funktion folgen.

Die Pumpe 15 in der hydraulischen Strecke der Leitungsstränge 11, 12 wird nicht zur Volumenförderung im eigentlichen Sinne einer hydraulischen Pumpe genutzt, sondern zur Anhebung oder Absenkung des Druckes in dem Leitungsstrang 12, der sich auf der Nehmerzylinderseite 16 befindet. Durch das Manometer 19 wird der Druck in der nehmerzylinderseitigen Anschlussleitung der Pumpe 15 gemessen, dieser Druck ist proportional zur Kupplungsbetätigungskraft. Soll eine bestimmte Druckdifferenz zwischen der Nehmerzylinderseite 16 und der Geberzylinderseite 17 eingestellt werden, so ist diese Druckdifferenz stets proportional zum Drehmoment, das an der Antriebswelle des Elektromotors 21 bzw. an der Eingangswelle der Pumpe 15 anliegt.

Der Druck auf der Nehmerzylinderseite 16 entspricht bei statischer Betrachtung, d. h. ohne Berücksichtigung von Druckdifferenzen, die sich aus dem fließenden Hydraulikfluid ergeben, dem Druck in dem ersten Leitungsstrang 11 bzw. in dem Nehmerzylinder 5. Der Druck auf der Geberzylinderseite 17 entspricht bei statischer Betrachtung dem Druck in dem zweiten Leitungsstrang 12 sowie dem Druck in dem Geberzylinder 4.

Das Drehmoment des Elektromotors 21, der die Pumpe 15 antreibt, lässt sich sehr einfach über die Stromstärke der Motorstromversorgung einstellen, da der Strom proportional zum Drehmoment des Elektromotors ist. Durch diese Art der Regelung ist die Pumpendrehzahl, die stark von der Leckage der Pumpe und von der Betätigungsgeschwindigkeit des Kupplungspedals abhängt, nicht relevant, sondern ergibt sich stets aus der Summe der Volumenströme aus Betätigung und Leckage.

Bei Betrieb der Pumpe 15 wird generell einen Leckagestrom auftreten. Dieser ist in der Darstellung der Fig. 2 in Form eines Bypasses 23 mit einer Drossel 25 angedeutet. In der Realität sind Bypass 23 und Drossel 25 nicht vorhanden, diese dienen lediglich der Erklärung und Verdeutlichung des Leckagestromes. Durch den Leckagestrom kann die Pumpe 15 Hydraulikflüssigkeit fördern, ohne dass Hydraulikflüssigkeit vom Geberzylinder 4 in den Nehmerzylinder 5 gefördert wird. Es wird also, ohne dass ein Volumenstrom erzeugt wird, eine Druckerhöhung von der Geberzylinderseite 17 zur Nehmerzylinderseite 16 bewirkt.

Die gewünschte Druckdifferenz ist stets proportional zum Antriebsstrom des Elektromotors 21, wobei sich dieser Antriebsstrom leicht regeln lässt. Das Manometer 19 als Drucksensor in dem nehmerzylinderseitigen ersten Leitungsstrang 11 ist gleichzeitig der Ein- und Ausschalter für das System. Bei einer geringen Kupplungskraft wird die Pumpe 15 nicht in Betrieb gesetzt und unterstützt das gesamte System nicht durch eine Druckerhöhung. Bei ruhendem Pedal der Kupplungausrückvorrichtung 3 wird das gesamte System in einen Stand-by-Modus, mithin also einem Modus, bei dem der Elektromotor 21 nicht in Betrieb ist, aber jederzeit durch den Regler 22 in Betrieb gesetzt werden könnte, versetzt. Überschreitet der durch das Manometer 19 gemessene Druck einen einstellbaren Grenzwert, so wird das System aktiviert. Die Druckdifferenz zwischen dem aktuell durch das Manometer 19 gemessenen Druck und dem Grenzwert wird bestimmt. Durch den Regler 22 wird ein elektrischer Strom zur Stromversorgung des Elektromotors 21 eingestellt, der über die Motorkennlinie des Elektromotors 21 und die Pumpenkennlinie der Pumpe 15 zumindest einen Teil, beispielsweise etwa 60 - 80%, dieser Druckdifferenz kompensiert. Dadurch, dass die Druckdifferenz nicht zu 100% kompensiert wird, bleibt der eigentliche Kraftverlauf der Kupplung 7 an der Kupplungsausrückvorrichtung 3 erhalten, ein Fahrer, der das Kupplungspedal tritt, wird also weiterhin einen entsprechenden Kraftverlauf an dem Kupplungspedal spüren können.

Fig. 2 zeigt eine Prinzipdarstellung eines erfindungsgemäßen hydraulischen Systems. Dargestellt sind nur die hydraulischen bzw. elektrischen Anteile, die sich zwischen Geberzylinder 4 und Nehmerzylinder 5 entsprechend der Darstellung in Fig. 1 befinden, die restlichen Baugruppen wurden der Einfachheit halber nicht dargestellt. Ebenso nicht dargestellt ist das Druckbegrenzungsventil 2, dieses kann in der Darstellung der Fig. 2 entweder auf der Geberzylinderseite 17 oder der Nehmerzylinderseite 16 angeordnet sein.

### Bezugszeichenliste

- 1: Hydraulisches System
- 2: Druckbegrenzungsventil
- 3: Kupplungsausrückvorrichtung
- 4: Geberzylinder
- 5: Nehmerzylinder
- 6: Ausrückmechanik
- 7: Kupplung
- 8: Brennkraftmaschine
- 9: Kurbelwelle
- 10: Getriebeeingangswelle
- 11: erster Leitungsstrang
- 12: zweiter Leitungsstrang
- 13: Mechanische Verbindung
- 14: Betätigungsglied
- 15: Pumpe
- 16: Nehmerzylinderseite
- 17: Geberzylinderseite
- 19: Manometer
- 20: Regelkreis
- 21: Elektromotor
- 22: Regler / Stromversorgung Elektromotor
- 39: Druckmediumleitung

## Patentansprüche

1. Hydraulisches Kupplungsbetätigungssystem für Kraftfahrzeuge umfassend einen Geberzylinder (4), einen Nehmerzylinder (5) und eine diese verbindende Druckmediumsleitung (39), **dadurch gekennzeichnet, dass** in der Druckmediumsleitung (39) eine hydraulische Pumpe (15) angeordnet ist, die den Druck auf der Nehmerzylinderseite (16) gegenüber dem Druck auf der Geberzylinderseite (17) um einen Differenzdruck erhöht, so dass bei gleichbleibendem Betätigungsweg des Geberzylinders (4) die auf den Geberzylinder (4) aufzubringende Betätigungskraft erniedrigt ist.

2. Hydraulisches Kupplungsbetätigungssystem nach dem vorhergehenden Anspruch, **dadurch gekennzeichnet, dass** die Pumpe (15) eine Flügelzellenpumpe oder eine Rotationskolbenpumpe oder eine Innenzahnradpumpe oder eine Kolbenpumpe oder dergleichen ist.

3. Hydraulisches Kupplungsbetätigungssystem nach einem der vorhergehenden Ansprüche, **dadurch gekennzeichnet, dass** mindestens an der Nehmerzylinderseite (16) ein Manometer (19) an der Druckmediumsleitung (39) angeordnet ist.

4. Hydraulisches Kupplungsbetätigungssystem nach einem der vorhergehenden Ansprüche, **dadurch gekennzeichnet, dass** mindestens an der Geberzylinderseite (17) ein Manometer (19) an der Druckmediumsleitung (39) angeordnet ist.

5. Hydraulisches Kupplungsbetätigungssystem nach Anspruch 3 oder 4, **dadurch gekennzeichnet, dass** das Manometer (19) ein elektrisches Signal abhängig vom Druck in der Druckmediumsleitung (39) abgeben kann.

6. Hydraulisches Kupplungsbetätigungssystem nach einem der vorhergehenden Ansprüche, **dadurch gekennzeichnet, dass** die Pumpe (15) durch einen Elektromotor (21) angetrieben wird.

7. Hydraulisches Kupplungsbetätigungssystem nach einem der vorhergehenden Ansprüche, **dadurch gekennzeichnet, dass** die Pumpe (15) pneumatisch, hydraulisch oder mechanisch betrieben ist.

8. Hydraulisches Kupplungsbetätigungssystem nach Ansprüche 3 und 6 oder 4 und 6, **dadurch gekennzeichnet, dass** Pumpe (15), Manometer (19), Elektromotor (21) und ein Regler (22) Teil eines Regelkreises (20) sind.

9. Hydraulisches Kupplungsbetätigungssystem nach einem der vorhergehenden Ansprüche, **dadurch gekennzeichnet, dass** ein Regler (22),der die Pumpleistung der Pumpe (15) auf einen durch den Regler (22) vorgegebenen Differenzdruck (18) regelt, vorgesehen ist.

10. Hydraulisches Kupplungsbetätigungssystem nach dem vorhergehenden Anspruch, **dadurch gekennzeichnet, dass** eine Pumpe (15) vorgesehen ist, deren Pumpleistung auf einen konstanten Differenzdruck (18) geregelt ist.

11. Hydraulisches Kupplungsbetätigungssystem nach Anspruch 9, **dadurch gekennzeichnet, dass** eine Pumpe (15) vorgesehen ist, deren Pumpleistung auf einen Differenzdruck (18) geregelt ist, der abhängig vom Druck auf der Nehmerzylinderseite (16) ist.

12. Hydraulisches Kupplungsbetätigungssystem nach Anspruch 9, **dadurch gekennzeichnet, dass** eine Pumpe vorgesehen ist, deren Pumpleistung auf einen Differenzdruck (18) geregelt ist, der abhängig vom Druck auf der Geberzylinderseite (17) ist.

13. Hydraulisches Kupplungsbetätigungssystem nach einem der vorhergehenden Ansprüche, **dadurch gekennzeichnet, dass** eine Pumpe (15) vorgesehen ist, die bei etwa druckloser Geberzylinderseite (17) abgeschaltet ist.

14. Hydraulisches Kupplungsbetätigungssystem nach einem der vorhergehenden Ansprüche, **dadurch gekennzeichnet, dass** eine Pumpe (15) vorgesehen ist, die bei etwa druckloser Nehmerzylinderseite (16) abgeschaltet ist.

## Claims

1. A hydraulic clutch operating system for motor vehicles, including a master cylinder (4), a slave cylinder (5), and a pressure medium line (39) connecting them, **characterized in that** a hydraulic pump (15) is situated in the pressure medium line (39), which increases the pressure on the slave cylinder side (16) compared to the pressure on the master cylinder side (17) by a differential pressure, so that the actuating force to be applied to the master cylinder (4) is reduced while the actuating travel of the master cylinder (4) remains the same.

2. The hydraulic clutch operating system according to the preceding claim, **characterized in that** the pump (15) is a vane pump or a rotary displacement pump or an internal gear pump or a piston pump or the like.

3. The hydraulic clutch operating system according to one of the preceding claims, **characterized in that** a manometer (19) is situated in the pressure medium line (39) at least on the slave cylinder side (16).

4. The hydraulic clutch operating system according to one of the preceding claims, **characterized in that** a manometer (19) is situated in the pressure medium line (39) at least on the master cylinder side (17).

5. The hydraulic clutch operating system according to Claim 3 or 4, **characterized in that** the Manometer (19) can emit an electrical signal that depends on the pressure in the pressure medium line (39).

6. The hydraulic clutch operating system according to one of the preceding claims, **characterized in that** the pump (15) is driven by an electric motor (21).

7. The hydraulic clutch operating system according to one of the preceding claims, **characterized in that** the pump is (15) pneumatically, hydraulically or mechanically operated.

8. The hydraulic clutch operating system according to Claims 3 and 6 or 4 and 6, **characterized in that** the pump (15), manometer (19), electric motor (21) and a regulator (22) are parts of a closed-loop control circuit (20).

9. The hydraulic clutch operating system according to one of the preceding claims, **characterized in that** a regulator (22) is provided which regulates the pumping power of the pump (15) to a differential pressure (18) prescribed by the regulator (22).

10. The hydraulic clutch operating system according to the preceding claim, **characterized in that** a pump (15) is provided whose pumping power is regulated to a constant differential pressure (18).

11. The hydraulic clutch operating system according to Claim 9, **characterized in that** a pump (15) is provided whose pumping power is regulated to a differential pressure (18) which is dependent on the pressure on the slave cylinder side (16).

12. The hydraulic clutch operating system according to Claim 9, **characterized in that** a pump is provided whose pumping power is regulated to a differential pressure (18) which is dependent on the pressure on the master cylinder side (17).

13. The hydraulic clutch operating system according to one of the preceding claims, **characterized in that** a pump (15) is provided which is turned off when the master cylinder side (17) is approximately pressureless.

14. The hydraulic clutch operating system according to one of the preceding claims, **characterized in that** a pump (15) is provided which is turned off when the slave cylinder side (16) is approximately pressureless.

## Revendications

1. Système hydraulique de commande d'embrayage pour véhicules automobiles comprenant un cylindre capteur (4), un cylindre récepteur (5) et une conduite à fluide sous pression (39) reliant ces cylindres, **caractérisé en ce qu'**une pompe (15) hydraulique est disposée dans la conduite de fluide sous pression (39), laquelle pompe augmente la pression du côté cylindre récepteur (16) par rapport à la pression du côté cylindre capteur (17) d'une différence de pression, de sorte que, pour une course d'actionnement uniforme du cylindre capteur (4), la force d'actionnement appliquée sur le cylindre capteur (4) est abaissée.

2. Système hydraulique de commande d'embrayage selon la revendication précédente, **caractérisé en ce que** la pompe (15) est une pompe à ailettes semi-rotative ou une pompe à piston rotatif ou une pompe à roue à denture intérieure ou une pompe à piston ou similaire.

3. Système hydraulique de commande d'embrayage selon l'une quelconque des revendications précédentes, **caractérisé en ce que**, au moins du côté cylindre récepteur (16), un manomètre (19) est disposé sur la conduite de fluide sous pression (39).

4. Système hydraulique de commande d'embrayage selon l'une quelconque des revendications précédentes, **caractérisé en ce que**, au moins du côté cylindre capteur (17), un manomètre (19) est disposé sur la conduite à fluide sous pression (39).

5. Système hydraulique de commande d'embrayage selon la revendication 3 ou 4, **caractérisé en ce que** le manomètre (19) peut émettre un signal électrique en fonction de la pression dans la conduite à fluide sous pression (39).

6. Système hydraulique de commande d'embrayage selon l'une quelconque des revendications précédentes, **caractérisé en ce que** la pompe (15) est entraînée par un moteur électrique (21).

7. Système hydraulique de commande d'embrayage selon l'une quelconque des revendications précédentes, **caractérisé en ce que** la pompe (15) est exploitée de façon pneumatique, hydraulique ou mécanique.

8. Système hydraulique de commande d'embrayage selon les revendications 3 et 6 ou 4 et 6, **caractérisé en ce que** la pompe (15), le manomètre (19), le moteur électrique (21) et un régulateur (22) font partie d'un circuit régulateur (20).

9. Système hydraulique de commande d'embrayage selon l'une quelconque des revendications précédentes, **caractérisé en ce qu'**un régulateur (22), qui régule la puissance de pompage de la pompe (15) sur une pression différentielle (18) prédéfinie par le régulateur (22), est prévu.

10. Système hydraulique de commande d'embrayage selon les revendications précédentes, **caractérisé en ce qu'**il est prévu une pompe (15) dont la puissance de pompage est réglée sur une puissance différentielle (18) constante.

11. Système hydraulique de commande d'embrayage selon la revendication 9, **caractérisé en ce qu'**il est prévu une pompe (15) dont la puissance de pompage est réglée sur une puissance différentielle (18) qui est dépendante de la pression sur le côté cylindre récepteur (16).

12. Système hydraulique de commande d'embrayage selon la revendication 9, **caractérisé en ce qu'**il est prévu une pompe dont la puissance de pompage est réglée sur une pression différentielle (18) qui est fonction de la pression sur le côté cylindre capteur (17).

13. Système hydraulique de commande d'embrayage selon l'une quelconque des revendications précédentes, **caractérisé en ce qu'**il est prévu une pompe (15) qui est déconnectée lorsque le côté cylindre capteur (17) est par exemple hors pression.

14. Système hydraulique de commande d'embrayage selon l'une quelconque des revendications précédentes, **caractérisé en ce qu'**il est prévu une pompe (15) qui est déconnectée lorsque le côté cylindre récepteur (16) est par exemple hors pression.
